# EUROPÄISCHE PATENTSCHRIFT

(11) **EP 2 838 171 B1**
(45) Veröffentlichungstag und Bekanntmachung des Hinweises auf die Patenterteilung: **16.09.2015**
(21) Anmeldenummer: 14002479.5
(22) Anmeldetag: 17.07.2014
(51) Int. Cl.: H02G 3/12, H02G 3/20, F21V 33/00, F21V 23/06, F21V 21/002

(54) **Elektrisches Installationsgerät mit Beleuchtungselement**
Electrical installation device with illumination element
Appareil d'installation électrique doté d'un élément d'éclairage

(30) Priorität: 12.08.2013 DE 202013007161 U
(43) Veröffentlichungstag der Anmeldung: 18.02.2015
(73) Patentinhaber: ABB AG, 68309 Mannheim (DE)
(72) Erfinder: Bankstahl, Johannes, 58739 Wickede / Ruhr (DE)

(56) Entgegenhaltungen:
- DE-A1-102010 008 507
- DE-B3-102011 054 266
- DE-U1-202006 006 105
- US-A1- 2007 014 102

## Beschreibung

Die Erfindung betrifft ein elektrisches Installationsgerät, insbesondere eine Schutzkontaktsteckdose, mit einem Beleuchtungselement.

Bekannte Elektro-Installationsgeräte, die als Unterputz-, Doppel- oder Mehrfach- Unterputz Steckdosen oder als Aufputz- Steckdosen ausgeführt sein können, bestehen üblicherweise aus einem sockelartigen Geräte-Einsatz mit einem rahmenartigen Tragelement zur Auflage auf einer Geräte-Trägerebene, aus einer mit dem Geräte-Einsatz mechanisch zu verbindenden Zentralabdeckung, auch als Zentralscheibe bekannt, sowie einem die Zentralabdeckung umgebenden Abdeckrahmen, wobei der Geräte-Einsatz elektrische Kontaktelemente zum Anschluss einer Netzspannung aufweist.

In zunehmendem Maße werden Steckdosen mit zusätzlichen Funktionen ausgestattet. Beispielsweise werden LEDs als Kontroll- oder Nachtorientierungslicht in die in die Zentralscheibe des Installationsgerätes integriert.

Aus der DE 20 2006 006 105 U1 ist ein elektrisches Installationsgerät mit einer Zentralabdeckung bekannt, welche eine integrierte Beleuchtungseinrichtung aufweist. Dabei sind die in der Zentralabdeckung integrierten Leuchtmittel dafür vorgesehen, über mechanische Verbindungskontakte der Zentralabdeckung selbsttätig die Kontaktelemente des Geräte-Einsatzes zum Abgriff der Netzspannung elektrisch zu kontaktieren. An der von dem Geräte-Einsatz wegweisenden Vorder- und/oder Unterseite der Zentralabdeckung weist diese einen Lichtaustritt auf. Die Leuchtmittel sind innerhalb der Zentralabdeckung im Bereich des Lichtaustritts angeordnet.

Aus der DE 10 2010 008 507 ist ein ähnliches elektrisches Installationsgerät mit einem Abdeckrahmen bekannt, in dem eine als Tasche ausgebildete Aufnahmevorrichtung für ein Leuchtmittel zur Hinterleuchtung des Abdeckrahmens vorgesehen ist.

Die vorab genannten elektrischen Installationsgeräte für die Gebäudeinstallation sind jedoch nicht geeignet eine optimale Innenraumbeleuchtung im Bereich der Steckdose zu schaffen.

Ausgehend von diesem Stand der Technik liegt der vorliegenden Erfindung die Aufgabe zu Grunde, ein elektrisches Installationsgerät für die Gebäudeinstallation, mit Steckdosentopf derart zu ertüchtigen, dass der elektrische Anschluss eines bewegbaren Beleuchtungselementes möglich ist.

Diese Aufgabe wird erfindungsgemäß gelöst durch ein elektrisches Installationsgerät für die Gebäudeinstallation, bestehend aus einer Zentralscheibe, einem Steckdosensockel und einem Abdeckrahmen, wobei
- die Zentralscheibe frontseitig in ihrem Zentrum einen Steckdosentopf und in ihrem Randbereich einen Anschluss bzw. eine Kontaktbuchse für ein Beleuchtungselement aufweist, wobei
- an der Rückseite der Zentralscheibe ein Isoliergehäuse des Anschlusses befestigt ist, in welchem eine zum elektrischen Anschluss des Beleuchtungselements dienende Aufnahmevorrichtung mit einem Kontaktsystem für das Beleuchtungselement, vorzugsweise einer bestücken Leiterplatte, integriert ist, wobei
- stirnseitige Kontakte der Anschlussvorrichtung das Isoliergehäuse durchbrechen und mit dem Beleuchtungselement einen elektrischen Kontakt herstellen, wobei
- im Steckdosensockel ein primärseitig am 230V-Wechselspannungsnetz angeschlossenes Netzteil mit einer mit elektrischen/elektronischen Baukomponenten bestückten Netzteil-Leiterplatte für die Energieversorgung des Beleuchtungselements integriert ist, wobei
- eine ein Federstiftgehäuse mit Federstiften aufweisende Federstiftkontaktvorrichtung im Steckdosensockel derart montiert ist, dass erste Federstiftkontakte mit den Kontakten für das Beleuchtungselement und zweite Federstiftkontakte mit Leiterbahnen der Netzteil-Leiterplatte unter Federspannung in elektrischen Kontakt treten, und wobei
- das Isoliergehäuse hierzu in einen im Sockelgehäuse des Steckdosensockels gebildeten Kontaktraum eintaucht, in welchem die ersten Federstiftkontakte zugänglich und kontaktierbar sind.

Das Beleuchtungselement ist vorzugsweise als sogenannte LED- Schwanenhalsleuchte ausgeführt, welche dreh- und/ oder schwenkbar ist. Dabei ist eine Rotationsvorrichtung unmittelbar an der Zentralscheibe zur Rotation der Leuchte vorgesehen.

Das erfindungsgemäße Installationsgerät kann als Unterputz-, Doppel- oder Mehrfach- Unterputz Steckdose oder als Aufputz- Steckdose ausgeführt sein.

Die mit der Erfindung erzielbaren Vorteile bestehen zunächst darin, dass aufgrund der vollständigen Integration des Netzteils im Steckdosensockel des elektrischen Installationsgerätes und der frontseitig zugänglichen Integration eines elektrisch mit diesem Netzteil verbundenen Anschlusses ein Kontaktsystem des Beleuchtungselements einsteckbar ist. Die einsteckbare Schwanenleuchte ist dabei in vorteilhafter Weise durch entsprechende Sicherheitsvorrichtungen gegen eine unbefugte Demontage oder Diebstahl geschützt.

In einer weiteren Ausführungsform ist die Schwanenhalsleuchte mechanisch fest, aber gegebenenfalls noch drehbar direkt mit der zentralscheibe verbunden. Durch die Verwendung, beispielsweise einer demontagesicheren Schraube im Steckdosentopf, wird auch in dieser Ausführungsform eine unbefugte Demontage der Steckdose mit dem integriertem Beleuchtungselement vermieden.

Gleichzeitig kann selbstverständlich für den Anschluss an das 230V-Wechselspannungsnetz ein üblicher 230V-Schuko-Stecker, ein Stecker mit Mittelerdbuchse eines elektrischen Gerätes im Steckdosentopf eingesteckt sein. Auch kann die erfindungsgemäße Unterputz-Steckdose für weitere Steckertypen ausgelegt sein, wie beispielsweise die in Nordamerika und in Teilen Asiens (Japan, Vietnam und China) übliche Formen von Steckern und Mehrphasenstecker, sogenannte NEMA-Stecker, oder Steckertypen nach British Standard.

Der zwischen dem Steckdosentopf der Zentralscheibe und dem Randbereich der Zentralscheibe und des Steckdosensockels zur Verfügung stehende sehr geringe Bauraum wird optimal für das erfindungsgemäß vorgeschlagene Kontaktsystem mit dem Beleuchtungselement genutzt, wobei ein "Tapetenausgleich" berücksichtigt ist. Der "Tapetenausgleich" von mindestens 2mm wird durch den Federweg der Federstifte der Federstiftkontaktvorrichtung ("Pogo Pins" oder allgemein Spiralfeder-Anordnung) ermöglicht.

In einer bevorzugten Ausführungsform des elektrischen Installationsgerätes lässt sich das Beleuchtungselement über einen an der Zentralscheibe oder am Beleuchtungselement befindliches Betätigungselement, beispielsweise einen Schalter oder einen Drehregler, einschalten und/oder dimmen.

Vorteilhafte Ausgestaltungen der Erfindung sind im Unteranspruch sowie in der nachfolgenden Beschreibung angeführt.

Die Erfindung wird nachstehend anhand der in der Zeichnung dargestellten Ausführungsbeispiele näher erläutert. Es zeigen:
- **Fig. 1**: eine perspektivische Sicht auf eine erfindungsgemäße Unterputz- Steckdose einer ersten Ausführungsform mit integriertem Beleuchtungselement,
- **Fig. 2**: eine weitere Ansicht der erfindungsgemäßen Unterputz-Steckdose mit dem Beleuchtungselement,
- **Fig. 3**: eine weitere Ansicht der erfindungsgemäßen Unterputz-Steckdose mit dem Beleuchtungselement vor dem Zusammenbau,
- **Fig.4**: eine Ansicht des Steckdosensockels der erfindungsgemäßen Unterputz-Steckdose,
- **Fig. 5**: eine Detailansicht des Steckdosensockels der erfindungsgemäßen Unterputz-Steckdose,
- **Fig. 6**: eine perspektivische Sicht auf die Rückseite der Zentralscheibe der erfindungsgemäßen Unterputz-Steckdose,
- **Fig. 7**: eine Sicht auf die Rückseite der Zentralscheibe 3 mit dem integrierten Beleuchtungselement 2,
- **Fig. 8**: eine optionale Ausführungsform der Unterputz- Gerätedose des erfindungsgemäßen Installationsgerätes für einen externen Anschluss eines Dimmers/Schalters, und
- **Fig. 9**: eine weitere Ausführungsform der Unterputz- Gerätedose des erfindungsgemäßen Installationsgerätes als Option für einen internen Anschluss.

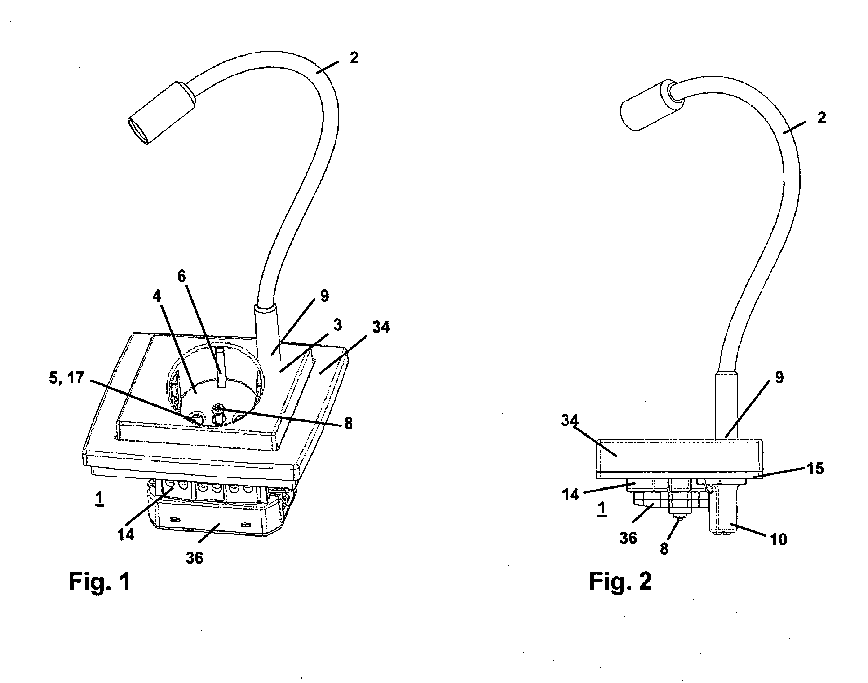

**Fig. 1** zeigt eine perspektivische Sicht auf die Frontseite des erfindungsgemäßen Installationsgerätes 1, das als Unterputz-Steckdose ausgeführt ist, mit einem Steckdosentopf 4, einer Zentralscheibe 3, einem Anschluss 9 und einem als sogenannte Schwanenhalsleuchte ausgeführtem Beleuchtungselement 2, wobei die Schwanenhalsleuchte mit dem Anschluss 9 elektrisch und mechanisch verbunden ist und im Niederspannungsbereich, beispielsweise bei 12V, betrieben wird. Als Leuchtmittel für die Schwanenhalsleuchte wird bevorzugt ein LED-Leuchtmittel eingesetzt.

Bei der in **Fig. 1** dargestellten Unterputz-Steckdose 1 handelt es sich um eine erste Ausführungsform einer Schutzkontakt- Steckdose mit Erdungsbügeln, die vorgesehene Öffnungen 6 für die Erdungsbügel im Steckdosentopf 4 der Zentralscheibe 3 der Unterputz-Steckdose 1 durchbrechen und aus einem elektrisch gut leitfähigem Metall bestehen.

Der Anschluss 9 des Beleuchtungselements 2 ist randseitig in einer frontseitigen Ecke) des Steckdosentopfes 4 der Zentralscheibe 3 angeordnet. Im Bodenbereich des Steckdosentopfes 4 befinden sich Öffnungen 5 für Steckerstifte eines Steckers (hier: Schutzkontakt-Stecker) zum Kontaktieren von Polkontakten 17, welche im Steckdosensockel 14 angeordnet sind. Im Bodenbereich des Steckdosentopfes 4 ist des Weiteren eine Zentralschraube 8 für die Befestigung der Zentralscheibe 3 am Steckdosensockel 14 angeordnet.

**Fig. 1** zeigt ferner den die Unterputz-Steckdose 1 komplettierenden Abdeckrahmen 34 und die für den Wandeinbau dienende normgerechten Unterputz-Gerätedose 36.

Durch den Abdeckrahmen 34 wird eine formschöne Einbindung/Integration in ein Installationsgeräte-Programm respektive Schalter- und Steckdosenprogramm sowie eine Kombination mit weiteren Geräten, beispielsweise Schaltern / Tastern / Dimmern / Steckdosen dieses Schalter- und Steckdosenprogramms ermöglicht, beispielsweise unter Einsatz von einfach- oder mehrfach Abdeckrahmen.

In der **Fig. 2** ist eine weitere Ansicht der erfindungsgemäßen Unterputz-Steckdose 1 mit dem Beleuchtungselement 2 dargestellt. Auf der Rückseite der Zentralscheibe 3 ist zwischen einem Tragring 15 des Steckdosensockels 14 und dem Steckdosentopf 4 ein Isoliergehäuse 10 zur Aufnahme des Anschlusses 9 für das Beleuchtungselement 2 zu erkennen, welches die elektrische Isolation zwischen der Kleinspannung des Beleuchtungselements und dem gegebenenfalls bei Auftreten eines Fehlerfalls auf einem Potential von 230V liegenden Tragring unter allen Umständen gewährleistet.

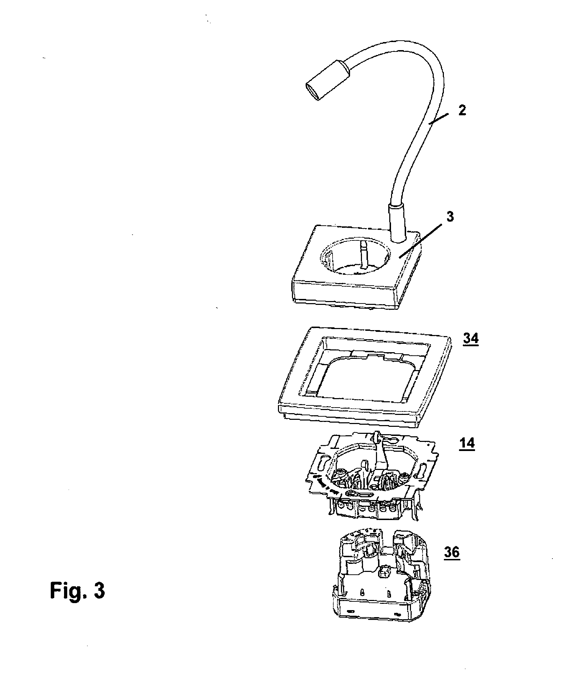

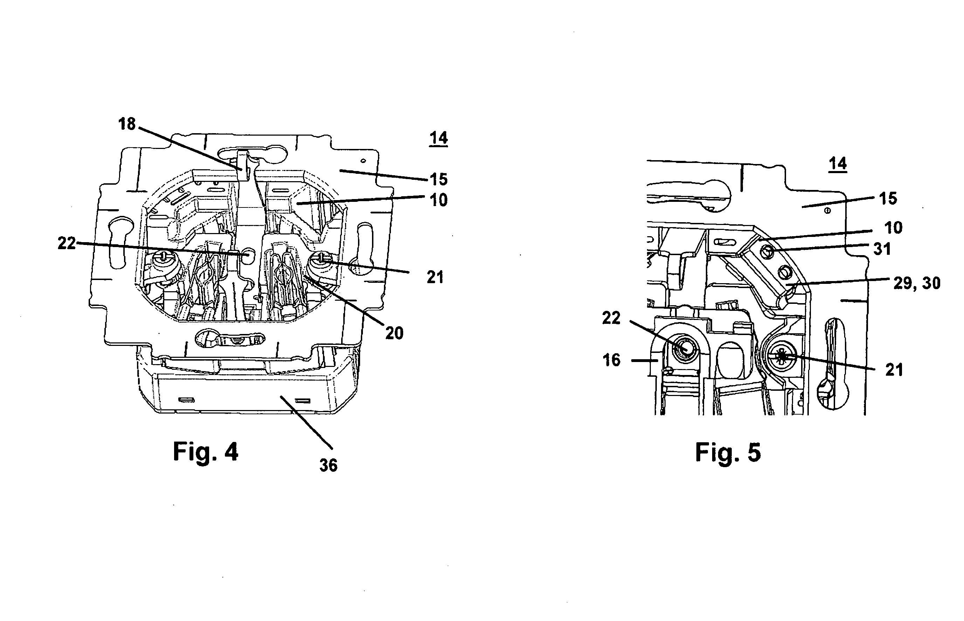

**Fig. 3** zeigt eine weitere Ansicht der erfindungsgemäßen Unterputz-Steckdose 1 mit dem Beleuchtungselement 2 vor dem Zusammenbau mit den Einzelteilen
- Unterputz- Gehäusedose 36, in welcher ein Netzteil integrierbar ist,
- Steckdosensockel 14, der in der Fig. 4 näher erläutert wird,
- dem Abdeckrahmen 34, und
- der Zentralscheibe 3 mit dem integrierten Beleuchtungselement 2.

Die **Fig. 4** zeigt eine Ansicht des Steckdosensockels 14 der Unterputz-Steckdose 1. Es sind der Tragring 15 des Steckdosensockels 14, ein Gewinde 22 zur Aufnahme der vorstehend erwähnten Zentralschraube 8, eine Spreizen-Betätigungsschraube 21 für die Beaufschlagung einer Spreize, der Erdungsbügel 18 sowie das Isoliergehäuse 10 zu erkennen. Der gezeigte Steckdosensockel 14 wird von der Unterputz- Gehäusedose 36 aufgenommen.

In **Fig. 5** ist eine Detailansicht eines Steckdosensockels 14 mit dem Tragring 15, einem Abschnitt einer Berührungsschutzvorrichtung 16 ("Kinderschutzvorrichtung") für die Abdeckung der Polkontakte 17, dem Gewinde 22 zur Aufnahme der Zentralschraube 8, der Spreizen-Betätigungsschraube 21 sowie die Stirnseite der vom Isoliergehäuse 10 aufgenommenen Federstiftkontaktvorrichtung 29 mit Federstiftgehäuse 30 und erste Federstiftkontakten 31 der Federstifte dargestellt.

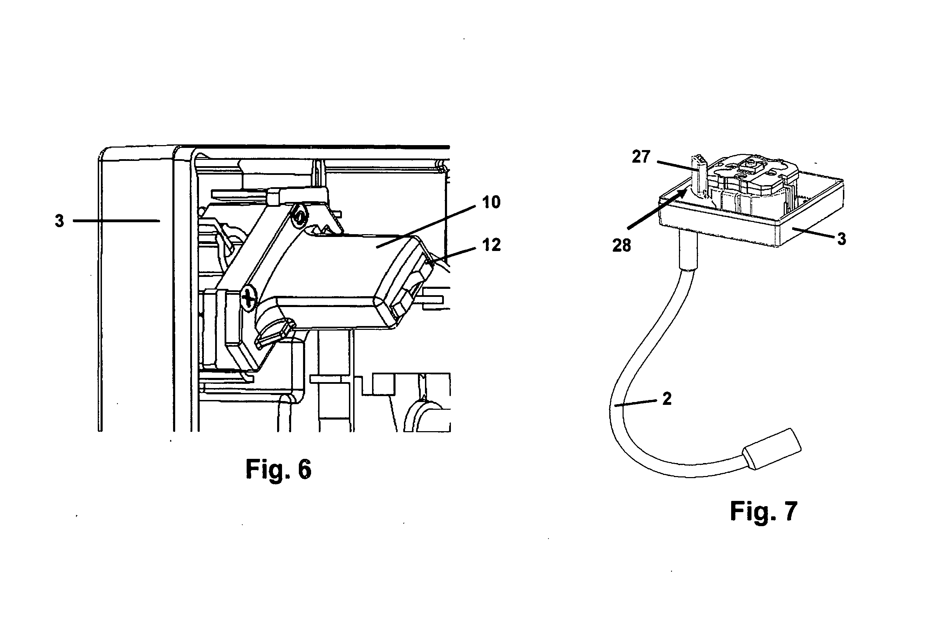

In **Fig. 6** ist eine perspektivische Sicht auf die Rückseite der Zentralscheibe 3 der erfindungsgemäßen Unterputz-Steckdose 1 dargestellt. Es ist das an der Rückseite der Zentralscheibe 3 befestigte Isoliergehäuse 10 des Anschlusses 9 für das Beleuchtungselement 2 mit den stirnseitigen Kontakten 12 einer als Leiterplatte ausgeführten zum elektrischen Anschluss 9 des Beleuchtungselements 2 dienende Anschlussvorrichtung zu erkennen.

Der Anschluss 9 für das Beleuchtungselement ist beispielsweise über eine Verdrahtung von den Kontakten der Schwanenhalsleuchte zu internen Kontakten beispielsweise über die Leiterplatte ausgeführt.

**Fig. 7** zeigt eine Sicht auf die Rückseite der Zentralscheibe 3 mit dem integrierten Beleuchtungselement 2, welches einen in der Zentralscheibe 3 vorgesehenen Kontaktdom 27 zum elektrischen Anschluss des Beleuchtungselements 2an das Stromnetz aufweist.

Weiterhin ist in der **Fig. 7** ein Bauraum 28 zur Verbindung des Beleuchtungselements 2 zum Kontaktdom gezeigt.

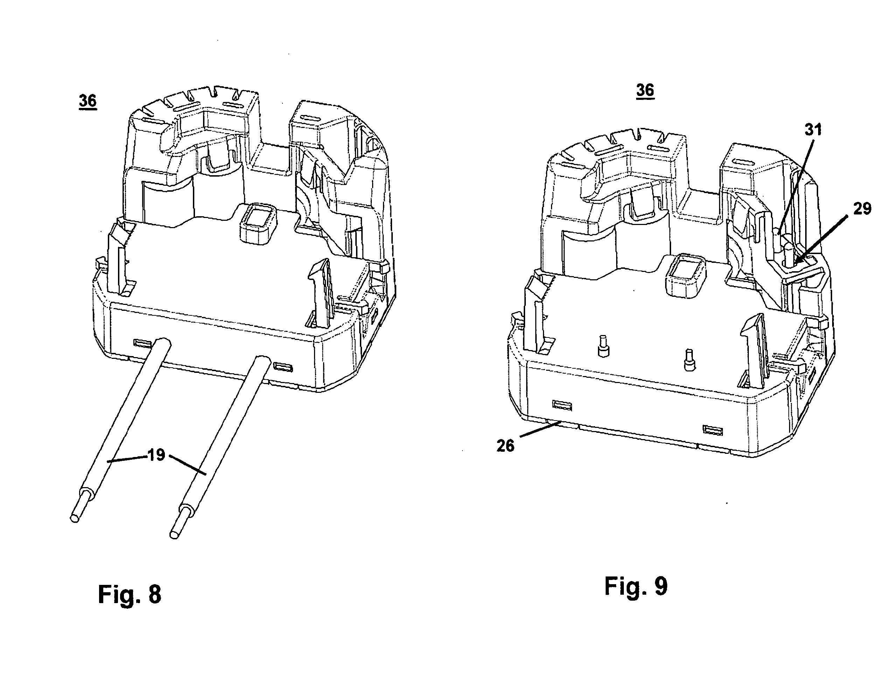

In der **Fig. 8** ist eine optionale Ausführungsform der Unterputz- Gerätedose 36 des erfindungsgemäßen Installationsgerätes gezeigt, welche Verbindungsleitungen bzw. Anschlussverbindungen 19 für eine externe Verdrahtung, beispielsweise zu einem Schalter oder Dimmer aufweist.

Die das Federstiftgehäuse 30 mit den Federstiften aufweisende Federstiftkontaktvorrichtung 29 ist dabei im Steckdosensockel 14 derart montiert, dass die ersten Federstiftkontakte 31 mit den Kontakten 12 für das Beleuchtungselement 2 und zweite Federstiftkontakte mit der Anschlussverbindung 19 für die externe Verdrahtung und/oder das externe Schalten des Beleuchtungselements 2 unter Federspannung in elektrischen Kontakt treten.

**Fig. 9** zeigt als eine weitere optionale Ausführungsform die Unterputz- Gerätedose 36 des erfindungsgemäßen Installationsgerätes, wobei die Federstifte 31 der Federkontaktvorrichtung 29 als ausgebrochener Bereich dargestellt sind.

Für den in **Fig. 9** dargestellten internen Anschluss 9 des Beleuchtungselementes 2 kann ein Netzteil in die Gerätedose 36 integriert sein. Das Netzteil dient zur Energieversorgung des Beleuchtungselements 2 und weist beispielsweise eine in das ein Sockelgehäuse integrierte Netzteil-Leiterplatte auf, welche zur Montage und zum elektrischen Anschluss von elektrischen/elektronischen Baukomponenten inklusive Transformator sowie zum Anschluss von primärseitigen 230V-Versorgungsleitungen (Phasenleiter und Nullleiter eines 230V-Wechselspannungsnetzes sowie Schutzleiter) und zur Kontaktierung der sekundärseitig zur Verfügung gestellten Kleinspannung dient.

Der Spannungsabgriff erfolgt über zweite Federstiftkontakte der Federstifte der Federstiftkontaktvorrichtung 29, welche entsprechende Leiterbahnen der Netzteil-Leiterplatte kontaktieren und über die ersten Federstiftkontakte 31 der Federstifte der Federstiftkontaktvorrichtung 29, welche bei komplett montierter Unterputz-Steckdose 1 gegen die das Isoliergehäuse 10 des Anschlusses 9 durchbrechenden Kontakte pressen. Die für die elektrische Kontaktierung erforderliche Kontaktkraft wird dabei von den Federstiften der Federstiftkontaktvorrichtung 29 aufgebracht. Eine Bodenplatte 26 des Sockelgehäuses bildet den rückseitigen Abschluss des Sockelgehäuses des Steckdosensockels 14.

Die Federstifte respektive "Pogo Pins" oder allgemein Spiralfeder-Anordnung vereinfachen die Herstellung des Gerätes, da sie nicht gelötet werden müssen und damit ein Handling in der Lötlinie mit hochstehenden Teilen auf der Netzteil-Leiterplatte vermieden wird, wie es beispielsweise bei Ausführungen mit Stiftleisten notwendig wäre. Die Federstifte federn beidseitig bezüglich des ersten und zweiten Endes des Federstiftgehäuses 30, werden einfach in das Sockelgehäuse eingelegt und danach mit der Netzteil-Leiterplatte im Sockelgehäuse verspannt oder verrastet.

Bei der Endmontage der Unterputz-Steckdose 1 durch den Elektroinstallateur, d. h. Befestigung der Zentralscheibe 3 auf den in der Unterputz-Gerätedose 36 montierten Steckdosensockel 14, ist die vorgeschlagene Lösung ebenfalls vorteilhaft, da beispielsweise keinerlei Gefahr besteht, dass dabei Kontaktierungs-Bauelemente verbogen werden können, wie dies bei der Verwendung von langen Stiftleisten für die Kontaktierung der Fall wäre.

### Bezugszeichenliste

- 1: elektrisches Installationsgerät, Unterputz-Steckdose
- 2: Beleuchtungselement, Schwanenhalsleuchte
- 3: Zentralscheibe einer Unterputz-Steckdose
- 4: Steckdosentopf
- 5: Öffnungen für Steckerstifte
- 6: Öffnungen für Erdungsbügel
- 7: -
- 8: Zentralschraube
- 9: Anschluss des Beleuchtungselements
- 10: Isoliergehäuse des Anschlusses 9
- 11: -
- 12: stirnseitige Kontakte einer Anschlussvorrichtung für Beleuchtungselement
- 13: -
- 14: Steckdosensockel einer Unterputz-Steckdose
- 15: Tragring
- 16: Berührungsschutzvorrichtung
- 17: Polkontakte
- 18: Erdungsbügel
- 19: Anschlussverbindung für externe Verdrahtung/externes Schalten
- 20: Spreizen
- 21: Spreizen-Betätigungsschraube
- 22: Gewinde für Zentralschraube
- 23: -
- 24: -
- 25: -
- 26: Bodenplatte des Sockelgehäuses
- 27: Kontaktdom
- 28: Bauraum
- 29: Federstiftkontaktvorrichtung mit Federstiften
- 30: Federstiftgehäuse
- 31: erste Federstiftkontakte der Federstifte
- 32: -
- 33: -
- 34: Abdeckrahmen
- 35: -
- 36: Unterputz-Gerätedose

## Patentansprüche

1. Elektrisches Installationsgerät (1), bestehend aus einer Zentralscheibe (3), einem Steckdosensockel (14) und einem Abdeckrahmen (34), wobei
- die Zentralscheibe (3) frontseitig in ihrem Zentrum einen Steckdosentopf (4) und in ihrem Randbereich einen Anschluss (9) oder eine Kontaktbuchse für ein Beleuchtungselement (2) aufweist, wobei
- an der Rückseite der Zentralscheibe (3) ein Isoliergehäuse (10) des Anschlusses (9) befestigt ist, in welchem eine zum elektrischen Anschluss (9) des Beleuchtungselements (2) dienende Anschlussvorrichtung, vorzugsweise einer Leiterplatte, mit einem Kontaktsystem für das Beleuchtungselement (2) integriert ist,
- stirnseitige Kontakte (12) der Anschlussvorrichtung das Isoliergehäuse (10) durchbrechen und mit dem Beleuchtungselement (2) einen elektrischen Kontakt herstellen,
- im Steckdosensockel (14) ein primärseitig am 230V-Wechselspannungsnetz angeschlossenes Netzteil mit einer mit elektrischen/elektronischen Baukomponenten bestückten Netzteil-Leiterplatte für die Energieversorgung des Beleuchtungselements (2) integriert ist,
- eine ein Federstiftgehäuse (30) mit Federstiften aufweisende Federstiftkontaktvorrichtung (29) im Steckdosensockel (14) derart montiert ist, dass erste Federstiftkontakte (31) mit den Kontakten (12) für das Beleuchtungselement (2) und zweite Federstiftkontakte mit Leiterbahnen der Netzteil-Leiterplatte unter Federspannung in elektrischen Kontakt treten, und
- das Isoliergehäuse (10) hierzu in einen im Sockelgehäuse des Steckdosensockels (14) gebildeten Kontaktraum eintaucht, in welchem die ersten Federstiftkontakte (31) zugänglich und kontaktierbar sind.

2. Elektrisches Installationsgerät (1) nach Anspruch 1, **dadurch gekennzeichnet, dass** sich das Beleuchtungselement (2) über einen auf der Zentralscheibe oder am Beleuchtungselement (2) befindliches Betätigungselement, beispielsweise einen Schalter oder einen Drehregler, einschalten und/oder seine dimmen lässt.

3. Elektrisches Installationsgerät (1) nach einem der vorstehenden Ansprüche, welches als Unterputz-, Doppel- oder Mehrfach- Unterputz Steckdosen oder als Aufputz- Steckdose ausgeführt ist.

4. Elektrisches Installationsgerät (1), bestehend aus einer Zentralscheibe (3), einem Steckdosensockel (14) und einem Abdeckrahmen (34), wobei
- die Zentralscheibe (3) frontseitig in ihrem Zentrum einen Steckdosentopf (4) und in ihrem Randbereich einen Anschluss (9) oder eine Kontaktbuchse für ein Beleuchtungselement (2) aufweist, wobei
- an der Rückseite der Zentralscheibe (3) ein Isoliergehäuse (10) des Anschlusses (9) befestigt ist, in welchem eine zum elektrischen Anschluss (9) des Beleuchtungselements (2) dienende Anschlussvorrichtung, vorzugsweise einer Leiterplatte, mit einem Kontaktsystem für das Beleuchtungselement (2) integriert ist,
- stirnseitige Kontakte (12) der Anschlussvorrichtung das Isoliergehäuse (10) durchbrechen und mit dem Beleuchtungselement (2) einen elektrischen Kontakt herstellen,
- in der Unterputz- Gerätedose (36) für die Energieversorgung des Beleuchtungselements (2) eine Anschlussverbindung (19) für eine externe Verdrahtung und/oder ein externes Schalten des Beleuchtungselements (2) integriert ist,
- eine ein Federstiftgehäuse (30) mit Federstiften aufweisende Federstiftkontaktvorrichtung (29) im Steckdosensockel (14) derart montiert ist, dass erste Federstiftkontakte (31) mit den Kontakten (12) für das Beleuchtungselement (2) und zweite Federstiftkontakte mit der Anschlussverbindung (19) für die externe Verdrahtung und/oder das externe Schalten des Beleuchtungselements (2) unter Federspannung in elektrischen Kontakt treten, und
- das Isoliergehäuse (10) hierzu in einen im Sockelgehäuse des Steckdosensockels (14) gebildeten Kontaktraum eintaucht, in welchem die ersten Federstiftkontakte (31) zugänglich und kontaktierbar sind.

## Claims

1. Electrical installation device (1), consisting of a central plate (3), a socket base (14) and a cover frame (34), wherein
- the central plate (3) has a socket recess (4) at the front centre thereof and a connection (9) or a contact socket for an illumination element (2) in its edge region, wherein
- an insulating housing (10) of the connection (9) is fastened on the rear of the central plate (3), in which insulating housing (10) a connection device, preferably of a printed circuit board, used for the electrical connection (9) of the illumination element (2) is integrated with a contact system for the illumination element (2),
- end-side contacts (12) of the connection device penetrate the insulating housing (10) and make electrical contact with the illumination element (2),
- a primary-side switched-mode power supply connected to the 230 V AC voltage mains is integrated in the socket base (14) with a switched-mode power supply printed circuit board populated with electrical/electronic components for supplying energy to the illumination element (2),
- a spring pin contact device (29) having a spring pin housing (30) with spring pins is mounted in the socket base (14) such that first spring-pin contacts (31) are brought into electrical contact under spring tension with the contacts (12) for the illumination element (2) and second spring-pin contacts are brought into electrical contact under spring tension with conductor tracks of the switched-mode power supply printed circuit board, and
- the insulating housing (10) descends for this purpose into a contact space formed in the base housing of the socket base (14), in which contact space the first spring-pin contacts (31) are accessible and contact can be made therewith.

2. Electrical installation device (1) according to Claim 1, **characterized in that** the illumination element (2) can be switched on and/or dimmed via an operating element, for example a switch or a rotary controller, located on the central plate or on the illumination element (2).

3. Electrical installation device (1) according to either of the preceding claims, which is embodied as flush-mounted, double flush-mounted or multiple flush-mounted sockets or as surface-mounted socket.

4. Electrical installation device (1), consisting of a central plate (3), a socket base (14) and a cover frame (34), wherein
- the central plate (3) has a socket recess (4) at the front centre thereof and a connection (9) or a contact socket for an illumination element (2) in its edge region, wherein
- an insulating housing (10) of the connection (9) is fastened on the rear of the central plate (3), in which insulating housing (10) a connection device, preferably of a printed circuit board, used for the electrical connection (9) of the illumination element (2) is integrated with a contact system for the illumination element (2),
- end-side contacts (12) of the connection device penetrate the insulating housing (10) and make electrical contact with the illumination element (2),
- a connection (19) for external wiring and/or external switching of the illumination element (2) is integrated in the flush-mounted device socket (36) for supplying energy to the illumination element (2),
- a spring pin contact device (29) having a spring pin housing (30) with spring pins is mounted in the socket base (14) such that first spring-pin contacts (31) are brought into electrical contact under spring tension with the contacts (12) for the illumination element (2) and second spring-pin contacts are brought into electrical contact under spring tension with the connection (19) for external wiring and/or external switching of the illumination element (2), and
- the insulating housing (10) descends for this purpose into a contact space formed in the base housing of the socket base (14), in which contact space the first spring-pin contacts (31) are accessible and contact can be made therewith.

## Revendications

1. Appareil d'installation électrique (1) se composant d'une plaque centrale (3), d'un socle de prise de courant (14) et d'un cadre de couverture (34), dans lequel
- la plaque centrale (3) présente, du côté frontal, en son centre, un logement de prise de courant (4) et dans sa zone du bord, un raccordement (9) ou une douille de contact pour un élément d'éclairage (2), dans lequel
- à l'arrière de la plaque centrale (3) est fixé un boîtier isolant (10) du raccordement (9) dans lequel est intégré un dispositif de connexion servant à la connexion électrique (9) de l'élément d'éclairage (2), de préférence une plaque de circuit imprimé, avec un système de contact pour l'élément d'éclairage (2),
- des contacts (12) côté frontal du dispositif de connexion perçant le boîtier isolant (10) et établissant un contact électrique avec l'élément d'éclairage (2),
- dans le socle de prise de courant (14), un bloc d'alimentation, raccordé du côté primaire au réseau de tension alternative de 230V avec une plaque de circuit imprimé de bloc d'alimentation garnie de composants de montage électriques/électroniques, étant intégré pour l'alimentation en énergie de l'élément d'éclairage (2),
- un dispositif à contacts à tige à ressort (29), présentant un logement de tiges à ressort (30) avec des tiges à ressort, étant monté dans le socle de prise de courant (14) de manière à ce que des premiers contacts à tige à ressort (31) entrent en contact électrique par tension de ressort avec les contacts (12) pour l'élément d'éclairage (2) et que des deuxièmes contacts à tige à ressort entrent en contact électrique par tension de ressort avec des pistes conductrices de la plaque de circuit imprimé du bloc d'alimentation, et
- le boîtier isolant (10) plongeant à cet effet dans un espace de contact formé dans le logement de socle du socle de prise de courant (14), dans lequel espace les premiers contacts à tige à ressort (31) sont accessibles et peuvent être contactés.

2. Appareil d'installation électrique (1) selon la revendication 1, **caractérisé en ce que** l'élément d'éclairage (2) peut être allumé et/ou **en ce que** l'on peut faire varier sa lumière via un élément d'actionnement se trouvant sur la plaque centrale ou sur l'élément d'éclairage (2), par exemple un interrupteur ou un régulateur à induction.

3. Appareil d'installation électrique (1) selon l'une des revendications précédentes, lequel est réalisé en tant que prise de courant d'encastrement, double-prise ou multiprise d'encastrement ou en tant que prise de courant apparente.

4. Appareil d'installation électrique (1) se composant d'une plaque centrale (3), d'un socle de prise de courant (14) et d'un cadre de couverture (34), dans lequel
- la plaque centrale (3) présente, du côté frontal, en son centre, un logement de prise de courant (4) et dans sa zone du bord, un raccordement (9) ou une douille de contact pour un élément d'éclairage (2), dans lequel
- à l'arrière de la plaque centrale (3) est fixé un boîtier isolant (10) du raccordement (9) dans lequel est intégré un dispositif de connexion servant à la connexion électrique (9) de l'élément d'éclairage (2), de préférence une plaque de circuit imprimé, avec un système de contact pour l'élément d'éclairage (2),
- des contacts (12) côté frontal du dispositif de connexion perçant le boîtier isolant (10) et établissant un contact électrique avec l'élément d'éclairage (2),
- dans la prise d'encastrement d'appareil (36) pour l'alimentation en énergie de l'élément d'éclairage (2), une liaison de raccordement (19) étant intégrée pour un câblage externe et/ou un branchement externe de l'élément d'éclairage (2),
- un dispositif à contacts à tige à ressort (29), présentant un logement de tiges à ressort (30) avec des tiges à ressort, étant monté dans le socle de prise de courant (14) de manière à ce que des premiers contacts à tige à ressort (31) entrent en contact électrique par tension de ressort avec les contacts (12) pour l'élément d'éclairage (2) et que des deuxièmes contacts à tige à ressort entrent en contact électrique par tension de ressort avec la liaison de raccordement (19) pour le câblage externe et/ou le branchement externe de l'élément d'éclairage (2), et
- le boîtier isolant (10) plongeant à cet effet dans un espace de contact formé dans le logement de socle du socle de prise de courant (14), dans lequel espace les premiers contacts à tige à ressort (31) sont accessibles et peuvent être contactés.
